Europäisches Patentamt

(19) **European Patent Office**

**Office européen des brevets**

(11) Numéro de publication: **0 072 717 B1**

(12) **FASCICULE DE BREVET EUROPEEN**

(45) Date de publication du fascicule du brevet: **02.05.85**

(51) Int. Cl.⁴: **C 08 F 10/02**, C 08 F 4/62

(21) Numéro de dépôt: **82401211.6**

(22) Date de dépôt: **30.06.82**

(54) **Catalyseur homogène comprenant un métal de transition et du magnésium, son procédé de préparation et son application à la polymérisation de l'éthylène.**

(30) Priorité: **30.07.81 FR 8114813**

(43) Date de publication de la demande:
**23.02.83 Bulletin 83/8**

(45) Mention de la délivrance du brevet:
**02.05.85 Bulletin 85/18**

(84) Etats contractants désignés:
**AT BE CH DE GB IT LI LU NL SE**

(56) Documents cités:
**FR - A - 2 202 897**
**FR - A - 2 324 652**

**Le dossier contient des informations techniques présentées postérieurement au dépôt de la demande et ne figurant pas dans le présent fascicule.**

(73) Titulaire: **Société Chimique des Charbonnages S.A., Tour Aurore Place des Reflets, F-92080 Paris La Défense Cédex 5 (FR)**

(72) Inventeur: **Le Brasseur, Geneviève, 5 rue Debeaumont, F-62160 Bully les Mines (FR)**

## Description

La présente invention concerne des catalyseurs de polymérisation des oléfines et un procédé pour leur préparation.

FR-A-2 324 652 décrit la préparation d'un composant solide, destiné à préparer des catalyseurs de polymérisation, par mise en contact d'un composé de titane avec le produit solide d'halogénation obtenu par réaction d'un halogénure d'acide organique sur un alcoolate de magnésium, le rapport atomique $\frac{\text{halogène}}{\text{Mg} + \text{Ti}}$ étant supérieur à 2. Le produit d'halogénation contient une base de Lewis, par exemple l'ester formé par réaction de l'halogénure d'acide organique sur l'alcoolate de magnésium. Le composé de titane peut être ajouté pendant la réaction du composé de magnésium avec l'halogénure d'acide organique. Le rapport atomique $\frac{\text{Ti}}{\text{Mg}}$ est supérieur à 1.

On a trouvé que si le rapport atomique $\frac{\text{halogène}}{\text{Mg} + \text{Ti}}$ lors de la réaction entre un halogénure d'acide organique et un mélange d'alcoolate de magnésium et d'alcoolate d'un métal de transition est inférieur à 1, si le rapport $\frac{\text{M}}{\text{Mg}}$ dans le catalyseur obtenu est au plus égal à 0,6 et si l'ester formé par réaction entre l'halogénure d'acide organique et le mélange d'alcoolates est éliminé du produit formé, le catalyseur obtenu présente une activité nettement améliorée.

La présente invention a pour objet un catalyseur d'homopolymérisation de l'éthylène et de copolymérisation de l'éthylène avec des α-oléfines, comprenant au moins un métal de transition M choisi parmi les métaux des groupes IVa à VIa de la Classification Périodique, du magnésium Mg et au moins un halogène X, caractérisé en ce qu'il a pour formule générale $M_n \text{ Mg } (\text{OR})_{2+4n-M} X_m$ dans laquelle R est un radical alkyle comprenant de 1 à 4 atomes de carbone, $0,05 \leqslant n \leqslant 0,6$ et $0 < m < n + 1$.

Le métal de transition M peut être le titane, le vanadium, le zirconium, le chrome ou un mélange de ces métaux. Dans ce dernier cas l'indice n s'applique à la somme des différents atomes métalliques. L'halogène X peut être le fluor, le chlore, le brome, l'iode ou un mélange de ces éléments. Egalement dans ce dernier cas l'indice m s'applique à la somme des différents atomes d'halogènes.

Avantageusement le métal de transition M est choisi parmi le titane et le vanadium, et l'halogène est le chlore.

Une procédé de préparation de catalyseurs selon l'invention consiste, successivement, à:

a) mettre en contact, en présence d'un solvant inerte, un alcoolate de magnésium $\text{Mg(OR)}_2$ et au moins un alcoolate d'un métal de transition $\text{M(OR)}_x$, dans lequel x est la valence maximale du métal M, les quantités respectives de chacun des alcoolates étant telles que le rapport atomique $\frac{\text{M}}{\text{Mg}}$ soit compris entre 0,05 et 0,6, à une température comprise entre 20°C et la température d'ébullition du solvant inerte, pendant une durée comprise entre 1 et 6 heures,

b) ajouter au mélange réactionnel obtenu en a), à une température comprise entre 0 et 30°C, au moins un halogénure d'un acide organique R'COX, dans lequel R' est un radical alkyle comprenant de 1 à 12 atomes de carbone, en quantité telle que le rapport atomique $\frac{\text{X}}{\text{Mg} + \text{M}}$ soit inférieur à 1,

c) chauffer le mélange réactionnel obtenu en b) à une température comprise entre 30°C et la température d'ébullition du solvant inerte, pendant une durée telle que la phase liquide dudit mélange réactionnel ne contienne plus ni halogène, ni métal de transition en solution,

d) éliminer l'ester d'alkyle R'COOR formé.

Les alcoolates de magnésium et de métal de transition sont avantageusement choisis parmi le méthylate, l'éthylate, le n-propylate et l'isopropylate. Les radicaux R, de l'alcoolate de magnésium d'une part, et de l'alcoolate de métal de transition d'autre part peuvent être identiques ou différents. L'halogénure d'acide organique R'COX est le fluor, le chlore, le brome ou l'iode, de préférence le chlore.

Le solvant inerte est choisi parmi les hydrocarbures saturés aliphatiques et cycloaliphatiques tels que l'hexane, l'heptane, l'octane, leurs isomères cycliques ramifiés ou non. De préférence ce solvant a une température d'ébullition supérieure à celle du ou des esters R'COOR formés lors de la réaction de l'halogénure d'acide organique sur le mélange des alcoolates. Ainsi l'élimination du ou desdits esters est possible par distillation en conservant le solvant dans le milieu réactionnel.

L'halogénure d'acide organique est de préférence dilué dans un solvant, par exemple identique à celui utilisé dans l'étape a), avant d'être ajouté au mélange d'alcoolates. L'étape c) est généralement complète en 1 à 3 heures.

L'ester d'alkyle formé peut être éliminé par lavage du produit obtenu à l'aide d'un solvant; avantageusement on l'élimine par distillation, éventuellement sour pression réduite.

Les catalyseurs selon l'invention présentent une grande utilité pour la polymérisation des oléfines, en particulier de l'éthylène, lorsqu'ils entrent dans la constitution de systèmes catalytiques comprenant en outre au moins un activateur choisi parmi les hydrures et les composés organométalliques des métaux des groupes I à III de la Classification Périodique, en quantité telle que le rapport atomique du métal dudit activateur au métal de transition du catalyseur soit compris entre 0,1 et 100. Plus particulièrement les activateurs sont choisis parmi les trialkylaluminiums, les halogénodialkylaluminiums, les alkylsiloxalanes (tels que ceux décrits dans FR-A-2 324 652) et les alkylaluminoxalanes.

L'activation des catalyseurs peut être effectuée in-situ dans le réacteur de polymérisation. Elle peut aussi avoir lieu préalablement. Dans ce dernier cas on préfère l'activation en deux étapes. Dans une première étape le catalyseur et l'activateur sont mis au contact l'une de l'autre, à basse température et généralement en présence d'un solvant tel qu'un hydrocarbure aliphatique ou cycloaliphatique saturé, dans des quantités relatives telles que le rapport atomique du métal de l'activateur au métal de transition du catalyseur soit compris entre 0,1 et 10. Le produit obtenu est ensuite, de préférence, stabilisé à l'aide d'un hydrocarbure insaturé contenant par exemple de 6 à 12 atomes de carbone dans un rapport molaire, relativement au métal de transition du catalyseur préactivé, soit compris entre 1 et 10. Dans une seconde étape le catalyseur préactivé est additionné du complément d'activateur soit préalablement à la polymérisation, soit dans le réacteur de polymérisation.

Un dernier objet de l'invention concerne l'application des catalyseurs selon l'invention à la polymérisation des oléfines. L'homopolymérisation de l'éthylène ou la copolymérisation de l'éthylène avec des $\alpha$-oléfines ayant de 3 à 8 atomes de carbone est réalisée à une température comprise entre 20 et 350°C, sous une pression comprise entre 1 et 2500 bars en présence d'un système catalytique tel que décrit ci-dessus. On peut effectuer la polymérisation ou la copolymérisation à une température comprise entre 20 et 200°C, sous une pression comprise entre 1 et 200 bars en solution ou en suspension dans un hydrocarbure liquide inerte ayant au moins 6 atomes de carbone.

On peut également effectuer la polymérisation ou la copolymérisation à une température comprise entre 180 et 350°C, sous une pression comprise entre 400 et 2500 bars, le temps de séjour moyen du système catalytique dans le réacteur de polymérisation étant compris entre 2 et 100 secondes. La polymérisation ou la copolymérisation peut être effectuée en présence d'un agent de transfert de chaîne, tel que l'hydrogène, à raison de jusqu'à 2% en moles.

Les exemples non limitatifs suivants ont pour but d'illustrer l'invention.

### Exemples 1 à 5 — Préparation des catalyseurs

Dans un réacteur muni de moyens de chauffage et refroidissement régulés et d'un agitateur, on met en suspension dans 600 ml de méthylcyclohexane, 114 g d'éthylate de magnésium et la quantité d'éthylate de titane $Ti(OC_2H_5)_4$ (exprimée en grammes) indiquée au tableau I. On chauffe au reflux sous agitation pendant 3 heures. On ajoute alors au milieu réactionnel, à la température de 30°C, la quantité de chlorure d'acétyle (exprimée en grammes) indiquée au tableau I, diluée dans 3 fois son volume de méthylcyclohexane. On poursuit la réaction en chauffant le milieu réactionnel à 40°C pendant 3 heures. La phase solvant ne contient plus ni chlore ni titane. On distille alors l'acétate d'éthyle formé, sous pression atmosphérique, et on compense par un ajout de solvant frais l'entraînement de méthylcyclohexane provoqué par cette opération. On obtient une suspension fine ayant l'aspect d'une crème homogène. Cette suspension est utilisée en l'état pour la préparation des systèmes catalytiques. Une partie aliquote est prélevée et séchée aux fins des analyses élémentaires permettant de calculer les indices n et m/n + 1 figurant au tableau I.

#### TABLEAU I

| Exemple | $Ti(OC_2H_5)_4$,g | $CH_3COCl$,g | n | m/n + 1 |
|---|---|---|---|---|
| 1 | 122 | 119 | 0,5 | 0,95 |
| 2 | 122 | 55 | 0,5 | 0,5 |
| 3 | 68,5 | 51 | 0,3 | 0,5 |
| 4 | 18,2 | 21 | 0,08 | 0,25 |
| 5 | 18,2 | 80,5 | 0,08 | 0,95 |

### Exemples 6 à 10 — Polymérisation de l'éthylène sous basse pression

Les catalyseurs obtenus selon les exemples 1 à 5 sont activés, en suspension dans le milieu réactionnel de leur préparation, à l'aide d'un mélange équimoléculaire de triéthylaluminium et de chlorodiéthylaluminium en solution dans un solvant, ajouté lentement de façon que la température ne dépasse pas environ 35°C, et en quantité telle que le rapport atomique $\frac{Al}{Ti+Mg}$ soit égal à 8.

La suspension obtenue est stabilisée à l'aide d'hexène, dans un rapport molaire $\frac{Hexène}{Ti}$ égal à 2, à une température de 30°C, et constitue le système catalytique.

Dans un réacteur autoclave en acier de contenance 1 litre on introduit 600 ml de coupe d'hydrocarbures saturés en $C_{11}$-$C_{12}$ puis de l'éthylène jusqu'à saturation sous une pression de 6 bars, puis la suspension de système catalytique préalablement préparée, en une quantité contenant 0,1 milliatome-gramme de métal de transition. La polymérisation de l'éthylène est effectuée à la température de 200°C pendant une durée de 1 minute en maintenant une pression constante de 6 bars d'éthylène. La solution est alors récupérée et le polymère séparé par filtration à température ambiante. On obtient le rendement catalytique $R_c$ en polyéthylène figurant au tableau II, exprimé en g/min/milliatome-gramme de métal de transition/mole d'éthylène/litre.

#### TABLEAU II

| Exemple | 6 | 7 | 8 | 9 | 10 |
|---|---|---|---|---|---|
| Catalyseur Exemple n° | 1 | 2 | 3 | 4 | 5 |
| $R_c$ | 1130 | 1150 | 1520 | 2490 | 1600 |

### Exemples 11 à 15 — Polymérisation de l'éthylène sous haute pression

Les catalyseurs obtenus selon les exemples 1 à 5 sont préactivés, en suspension dans le milieu réactionnel de leur préparation, à l'aide d'un mélange équimoléculaire de triéthylaluminium et de chlorodiéthylaluminium en solution dans un solvant, ajouté lentement de façon que la température ne dépasse pas environ 35°C, en quantité telle que le rapport atomique $\frac{Al}{Ti+Mg}$ soit égal à 6.

La suspension obtenue est stabilisée à l'aide d'hexène, à une température de 30°C, dans un rapport molaire $\frac{Hexène}{Ti}$ égal à 5, et constitue le système catalytique.

Dans un réacteur autoclave de 0,6 litre de volume maintenu à la température de 230°C on effectue la polymérisation en continu de l'éthylène sous une pression de 800 bars, la dispersion de système catalytique étant injectée selon un débit tel que le temps de séjour moyen du catalyseur dans le réacteur soit de 30 secondes environ. Le débit d'éthylène est de 10 kg/heure et le débit de suspension de système catalytique de 4 l/heure. La polymérisation est réalisée en présence d'hydrogène dans la proportion en volume indiquée au tableau III.

Le polyéthylène est obtenu avec un rendement catalytique $R_c$ précisé au tableau III, exprimé en kg/milliatome-gramme de métal de transition. Sa masse moléculaire moyenne en poids Mw et sa masse moléculaire moyenne en nombre Mn sont mesurées par chromatographie de perméation de gel. Son indice de fluidité (IF), selon la norme ASTM D 1238-73, est exprimé en dg/min. Le rapport $\dfrac{Mw}{Mn}$ représente l'indice de polydispersité.

### TABLEAU III

| Exemple | Catalyseur Ex. n° | $H_2$% | $R_c$ | $M_n$ | $\dfrac{Mw}{Mn}$ | IF |
|---|---|---|---|---|---|---|
| 11 | 1 | 0,2 | 5,1 | 10.800 | 8,4 | 15 |
| 12 | 2 | 0,1 | 6,7 | 17.000 | 5,5 | 6,8 |
| 13 | 3 | 0,1 | 8,6 | 19.400 | 5,4 | 2,9 |
| 14 | 4 | 0,1 | 15,0 | 22.100 | 3,7 | 9,4 |
| 15 | 5 | 0,1 | 12,0 | 13.600 | 4,6 | 19 |

*Exemple 16 — Polymérisation de l'éthylène sous haute pression dans un réacteur à plusieurs zones*

Dans un réacteur cylindrique vertical de volume 3 litres, divisé intérieurement par des écrans métalliques en 3 zones réactionnelles fonctionnant à des températures différentes (zone 1 : 200°C, zone 2 : 230°C, zone 3 : 280°C), on polymérise l'éthylène en continu sous une pression de 1000 bars. Le système catalytique est injecté dans la zone n° 1 à raison de 1 milliatome-gramme de titane par litre et dans la zone n° 3 à raison de 1,5 milliatome-gramme de titane par litre. Ce système catalytique est constitué d'un catalyseur préparé dans les conditions de l'exemple 1, à l'exception du remplacement de l'éthylate de titane par l'isopropylate de titane, prépolymérisé par l'hexène-1 dans un rapport molaire $\dfrac{\text{Hexène-1}}{\text{Ti}} = 2$, puis activé par le diméthyléthyldiéthylsiloxalane, ajouté en quantité telle que le rapport atomique $\dfrac{Al}{Ti}$ soit égal à 3. La polymérisation est effectuée en présence de 10% en volume de propane.

On obtient le polymère avec un rendement catalytique égal à 7,2 kg/milliatome-gramme de titane. Ses caractéristiques sont les suivantes:

IF = 0,6 dg/min      $\rho$ = 0,950 g/cm3
Mn = 13.600      Mw/Mn = 9

*Exemple 17 — Copolymérisation de l'éthylène et du butène-1*

Dans le réacteur utilisé à l'exemple 16 et dans les mêmes conditions de pression, on copolymérise un mélange comprenant 40% de butène-1 et 60% d'éthylène à l'aide d'un système catalytique préparé à partir du catalyseur selon l'exemple 2, activé selon un rapport atomique $\dfrac{Al}{Ti} = 8$ à l'aide d'un mélange comprenant 1 partie de $Al(C_2H_5)_3$ pour 3 parties de $Al(C_2H_5)_2Cl$. Les trois zones réactionnelles fonctionnent à des températures respectives de 210°C (zone 1), 170°C (zone 2) et 250°C (zone 3). On obtient, avec un rendement catalytique égal à 10 kg/milliatome-gramme de Ti, un copolymère éthylène-butène-1 ayant les caractéristiques suivantes:

IF = 2,5 dg/min      $\rho$ = 0,930 g/cm3
Mn = 32.800      Mw/Mn = 3,7

Le procédé de polymérisation selon l'invention, illustré notamment par les exemples précédents, permet d'obtenir des polymères de masse volumique comprise entre 0,91 et 0,97 g/cm3 et d'indice de fluidité compris entre 0,2 et 20 dg/min.

**Revendications**

1. Catalyseur d'homopolymérisation de l'éthylène et de copolymérisation de l'éthylène avec des α-oléfines, comprenant au moins un métal de transition M choisi parmi les métaux des groupes IVa à VIa de la Classification Périodique, du magnésium et au moins un halogène X, caractérisé en ce qu'il a pour formule générale $M_n$ Mg $(OR)_{2+4n-m}$ $X_m$ dans laquelle R est un radical alkyle comprenant de 1 à 4 atomes de carbone, $0,05 \leqslant n \leqslant 0,6$ et $0 < m < n + 1$.

2. Catalyseur selon la revendication 1, caractérisé en ce que le métal de transition M est choisi parmi le titane et le vanadium.

3. Procédé de préparation d'un catalyseur selon la revendication 1, caractérisé en ce qu'il consiste, successivement, à:

a) mettre en contact, en présence d'un solvant inerte, un alcoolate de magnésium Mg(OR)₂ et au moins un alcoolate d'un métal de transition M(OR)ₓ, dans lequel x est la valence maximale du métal M, les quantités respectives de chacun des alcoolates étant telles que le rapport atomique $\dfrac{M}{Mg}$ soit compris entre 0,05 et 0,6, à une température comprise entre 20°C et la température d'ébullition du solvant inerte, pendant une durée comprise entre 1 et 6 heures,

b) ajouter au mélange réactionnel obtenu en a), à une température comprise entre 0 et 30°C, au moins un halogénure d'un acide organique R'COX, dans lequel R' est un radical alkyle comprenant de 1 à 12 atomes de carbone, en quantité telle que le rapport atomique $\dfrac{X}{Mg+M}$ soit inférieur à 1,

c) chauffer le mélange réactionnel obtenu en b) à une température comprise entre 30°C et la température d'ébullition du solvant inerte, pendant une durée telle que la phase liquide dudit mélange réactionnel ne contienne plus ni halogène, ni métal de transition en solution,

d) éliminer l'ester d'alkyle R'COOR formé.

4. Procédé selon la revendication 3, caractérisé en ce que l'halogène X est le chlore.

5. Système catalytique pour l'homopolymérisation de l'éthylène et la copolymérisation de l'éthylène avec des α-oléfines comprenant d'une part au moins un activateur choisi parmi les hydrures et les composés organométalliques des métaux des groupes I à III de la Classification Périodique, caractérisé en ce qu'il comprend d'autre part un catalyseur selon la revendication 1 et en ce que le rapport atomique du métal dudit activateur au métal de transition du catalyseur est compris entre 0,1 et 100.

6. Système catalytique selon la revendication 5, caractérisé en ce que l'activateur est le sesquichlorure d'éthylaluminium.

7. Procédé de polymérisation de l'éthylène ou de copolymérisation de l'éthylène avec des $\alpha$-oléfines ayant de 3 à 8 atomes de carbone, à une température comprise entre 20 et 350°C et sous une pression comprise entre 1 et 2500 bars, caractérisé en ce que ladite polymérisation ou copolymérisation est effectuée en présence d'un système catalytique selon la revendication 5.

8. Procédé selon la revendication 7, caractérisé en ce que la polymérisation ou la copolymérisationest effectuée à une température comprise entre 20 et 200°C, sous une pression comprise entre 1 et 200 bars et en solution ou en suspension dans un hydrocarbure liquide inerte ayant au moins 6 atomes de carbone.

9. Procédé selon la revendication 7, mis en oeuvre dans un réacteur dans lequel le temps de séjour moyen du système catalytique est compris entre 2 et 100 secondes, caractérisé en ce que la polymérisation ou la copolymérisation est effectuée à une température comprise entre 180 et 350°C et sous une pression comprise entre 400 et 2500 bars.

10. Procédé selon la revendication 9, caractérisé en ce que la polymérisation ou la copolymérisation est effectuée en présence de jusqu'à 2% en moles d'un agent de transfert de chaîne.

**Patentansprüche**

1. Katalysator für die Homopolymerisation von Äthylen und die Copolymerisation von Äthylen mit $\alpha$-Olefinen, der mindestens ein Übergangsmetall M ausgewählt aus den Metallen der Gruppen IVa bis VIa des Periodensystems, Magnesium und mindestens ein Halogen X enthält, dadurch gekennzeichnet, dass der Katalysator die allgemeine Formel $M_n$ Mg $(OR)_{2+4n-m}$ $X_m$ besitzt, in welcher R ein Alkylradikal mit 1 bis 4 Kohlenstoffatomen ist und $0,5 \leqslant n \leqslant 0,6$ und $0 < m < n + 1$ ist.

2. Katalysator nach Anspruch 1, dadurch gekennzeichnet, dass das Übergangsmetall M Titan oder Vanadium ist.

3. Verfahren zur Herstellung eines Katalysators nach Anspruch 1, dadurch gekennzeichnet, dass aufeinanderfolgend:

a) in Gegenwart eines inerten Lösungsmittels ein Magnesiumalkoholat Mg(OR)$_2$ und mindestens ein Übergangsmetallalkoholat mit der Formel M(OR)$_x$, in welcher x die maximale Wertigkeit des Metalls M ist miteinander bei einer Temperatur zwischen 20°C und der Siedetemperatur des inerten Lösungsmittels für eine Dauer zwischen 1 und 6 Stunden in Kontakt gebracht werden, wobei die Relativmengen der Alkoholate so sind, dass das Atomverhältnis $\frac{M}{Mg}$ zwischen 0,05 und 0,6 beträgt,

b) in der in a) erhaltenen Reaktionsmischung bei einer Temperatur zwischen 0 und 30°C mindestens ein Halogenid einer organischen Säure, das die Formel R'COX besitzt, in der R' ein Alkylradikal mit 1 bis 12 Kohlenstoffatomen ist, in einer solchen Menge zugesetzt wird, dass das Atomverhältnis $\frac{X}{Mg+M}$ weniger als 1 beträgt,

c) die in b) erhaltene Reaktionsmischung auf eine Temperatur zwischen 30°C und der Siedetemperatur des inerten Lösungsmittels für eine solche Dauer erhitzt wird, dass die Flüssigphase der genannten Reaktionsmischung weder Halogen noch Übergangsmetall in Lösung mehr enthält,

d) der gebildete Alkylester R'COOR eliminiert wird.

4. Verfahren nach Anspruch 3, dadurch gekennzeichnet, dass das Halogenid X Chlor ist.

5. Katalysatorsystem für die Homopolymerisation von Äthylen und die Copolymerisation von Äthylen mit $\alpha$-Olefinen, das einerseits einen Aktivator ausgewählt aus den Hydriden und den organometallischen Verbindungen von Metallen der Gruppen I bis III des Periodensystems enthält, dadurch gekennzeichnet, dass es anderseits einen Katalysator nach Anspruch 1 enthält und dass das Atomverhältnis des Metalls des genannten Aktivators zum Übergangsmetall des Katalysators zwischen 0,1 und 100 beträgt.

6. Katalysatorsystem nach Anspruch 5, dadurch gekennzeichnet, dass der Aktivator Äthylaluminium-Sesquichlorid ist.

7. Verfahren zur Polymerisation von Äthylen oder zur Copolymerisation von Äthylen mit $\alpha$-Olefinen mit 3 bis 8 Kohlenstoffatomen, bei einer Temperatur zwischen 20 und 350°C und unter einem Druck zwischen 1 und 2500 bar, dadurch gekennzeichnet, dass die genannte Polymerisation oder Copolymerisation in Gegenwart eines Katalysatorsystems nach Anspruch 5 durchgeführt wird.

8. Verfahren nach Anspruch 7, dadurch gekennzeichnet, dass die Polymerisation oder Copolymerisation bei einer Temperatur zwischen 20 und 200°C, unter einem Druck zwischen 1 und 200 bar und in Lösung oder in Suspension in einem inerten flüssigen Kohlenwasserstoff mit mindestens 6 Kohlenstoffatomen durchgeführt wird.

9. Verfahren nach Anspruch 7 durchgeführt in einem Reaktor, in dem die durchschnittliche Verweilzeit des Katalysatorsystems zwischen 2 und 100 Sekunden beträgt, dadurch gekennzeichnet, dass die Polymerisation oder die Copolymerisation bei einer Temperatur zwischen 180 und 350°C und unter einem Druck zwischen 400 und 2500 bar durchgeführt wird.

10. Verfahren nach Anspruch 9, dadurch gekennzeichnet, dass die Polymerisation oder die Copolymerisation in Gegenwart von bis zu 2 Mol-% eines Kettenübertragungsmittels durchgeführt wird.

**Claims**

1. Catalyst for the homopolymerisation of ethylene and the copolymerisation of ethylene with $\alpha$-olefines, which comprises at least one transition metal M selected from the metals of groups IVa to VIa of the Periodic Classification, magnesium and at least one halogen X, characterised in that it has the general formula $M_n Mg (OR)_{2+4n-m} X_m$, in which R is an alkyl radical containing from 1 to 4 carbon atoms, $0.05 \leqslant n \leqslant 0.6$ and $0 < m < n + 1$.

2. Catalyst according to claim 1, characterised in that the transition metal M is selected from titanium and vanadium.

3. Process for the preparation of a catalyst according to claim 1, characterised in that it consists, successively, in:

a) bringing a magnesium alcoholate $Mg(OR)_2$ into contact, in the presence of an inert solvent, with at least one transition metal alcoholate $M(OR)_x$, in which x is the maximum valency of the metal M, the respective amounts of each of the alcoholates being such that the atomic ratio $\dfrac{M}{Mg}$ is between 0.05 and 0.6, at a temperature of between 20°C and the boiling point of the inert solvent, for a period of between 1 and 6 hours.

b) adding to the reaction mixture obtained under a), at a temperature of between 0 and 30°C, at least one organic acid halide R'COX, in which R' is an alkyl radical containing from 1 to 12 carbon atoms, in an amount such thet the atomic ratio $\dfrac{X}{Mg+M}$ is less than 1,

c) heating the reaction mixture obtained under b) at a temperature of between 30°C and the boiling point of the inert solvent, for a period such that the liquid phase of the said reaction mixture no longer contains either halogen or transition metal insolution, and

d) removing the alkyl ester R'COOR formed.

4. Process according to claim 3, characterised in that the halogen X is chlorine.

5. Catalytic system for the homopolymerisation of ethylene and the copolymerisation of ethylene with $\alpha$-olefines, which comprises, on the one hand, at least one activator selected from the hydrides and the organometallic compounds of the metals of groups I to III of the Periodic Classification, characterised in that it comprises, on the other hand, a catalyst according to claim 1, and in that the atomic ratio of the metal in the said activator to the transition metal in the catalyst is between 0.1 and 100.

6. Catalyst system according to claim 5, characterised in that the activator is ethylaluminium sesquichloride.

7. Process for the polymerisation of ethylene or the copolymerisation of ethylene with $\alpha$-olefines having from 3 to 8 carbon atoms, at a temperature of between 20 and 350°C and under a pressure of between 1 and 2500 bars, characterised in that the said polymerisation or copolymerisation is carried out in the presence of a catalytic system according to claim 5.

8. Process according to claim 7, characterised in that the polymerisation or the copolymerisation is carried out at a temperature of between 20 and 200°C, under a pressure of between 1 and 200 bars, and in solution or in suspension in an inert liquid hydrocarbon having at least 6 carbon atoms.

9. Process according to claim 7, carried out in a reactor in which the average residence time of the catalyst system is between 2 and 100 seconds, characterised in that the polymerisation or the copolymerisation is carried out at a temperature of between 180 and 350°C and under a pressure of between 400 and 2500 bars.

10. Process according to claim 9, characterised in that the polymerisation or the copolymerisation is carried out in the presence of up to 2 moles% of a chain transfer agent.